(19) Europäisches Patentamt
European Patent Office
Office européen des brevets

(11) **EP 2 090 131 B1**

(12) **FASCICULE DE BREVET EUROPEEN**

(45) Date de publication et mention
de la délivrance du brevet:
**25.01.2012 Bulletin 2012/04**

(21) Numéro de dépôt: **07858651.8**

(22) Date de dépôt: **23.10.2007**

(51) Int Cl.:
**H04W 72/04** $^{(2009.01)}$

(86) Numéro de dépôt international:
**PCT/FR2007/052232**

(87) Numéro de publication internationale:
**WO 2008/050060 (02.05.2008 Gazette 2008/18)**

(54) **GESTION DES RESSOURCES DE TRANSMISSION DANS UN RESEAU DE COMMUNICATION CELLULAIRE**

VERWALTUNG VON ÜBERTRAGUNGSRESSOURCEN IN EINEM MOBILEN KOMMUNIKATIONSNETZWERK

MANAGEMENT OF TRANSMISSION RESOURCES IN A CELLULAR COMMUNICATION NETWORK

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **25.10.2006 FR 0609389**

(43) Date de publication de la demande:
**19.08.2009 Bulletin 2009/34**

(73) Titulaire: **FRANCE TELECOM**
**75015 Paris (FR)**

(72) Inventeur: **PHAN HUY, Dinh Thuy**
**75004 Paris (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
**EP-A- 1 575 326**

- **EUNCHUL YOON ET AL: "Exploiting Channel Statistics to Improve the Average Sum Rate in OFDMA Systems" VEHICULAR TECHNOLOGY CONFERENCE, 2005. VTC 2005-SPRING. 2005 IEEE 61ST STOCKHOLM, SWEDEN 30 APRIL - 01 MAY 2005, PISCATAWAY, NJ, USA,IEEE, [Online] 30 mai 2005 (2005-05-30), pages 1053-1057, XP010855570 ISBN: 0-7803-8887-9 Extrait de l'Internet: URL:http:// ieeexplore.ieee.org/iel5/10360/ 32959/01543467.pdf?arnumber=1543467> [extrait le 2007-05-23] cité dans la demande**
- **STERNAD M ET AL: "Channel Estimation and Prediction for Adaptive OFDMA/TDMA Uplinks, Based on Overlapping Pilots" ACOUSTICS, SPEECH, AND SIGNAL PROCESSING, 2005. PROCEEDINGS. (ICASSP '05). IEEE INTERNATIONAL CONFERENCE ON PHILADELPHIA, PENNSYLVANIA, USA MARCH 18-23, 2005, PISCATAWAY, NJ, USA,IEEE, 18 mars 2005 (2005-03-18), pages 861-864, XP010792383 ISBN: 0-7803-8874-7 cité dans la demande**

**Description**

**1. Domaine de l'invention**

Le domaine de l'invention est celui des communications numériques, et notamment des radiocommunications.

Plus précisément, l'invention concerne la transmission de signaux mettant en oeuvre une modulation de type OFDM (en anglais « orthogonal frequency division multiplexing », en français « multiplexage par répartition orthogonale de la fréquence »), en particulier dans le cadre de systèmes d'accès multiples utilisant une technologie d'accès de type OFDMA (en anglais « orthogonal frequency division multiplexing access »).

Encore plus précisément, l'invention concerne la gestion des ressources de transmission dans un réseau de communication cellulaire pour des communications sur voie montante, c'est-à-dire d'un terminal de radiocommunication vers une station de base.

On entend notamment par terminal un appareil mobile du type radiotéléphone, PDA (en anglais « Personal Digital Assistant », en français « assistant numérique personnel »), ordinateur portable, etc.

**2. Art antérieur**

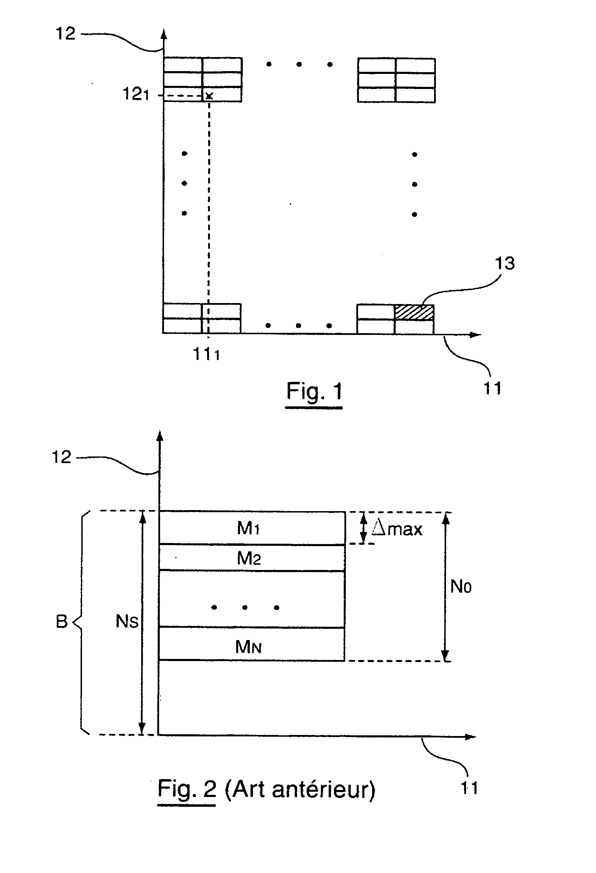

Par souci de clarté, on définit ci-après en relation avec la figure 1 la terminologie utilisée au cours de la description, et notamment la notion d'« unités de ressource » dans une trame OFDM.

Plus précisément, l'axe horizontal 11 définit les indices temporels des symboles OFDM (temps symbole), et l'axe vertical 12 définit les indices fréquentiels des symboles OFDM (sous-porteuses). Un symbole temps-fréquence correspond donc à un temps symbole donné $11_1$ pour une sous-porteuse donnée $12_1$, et une unité de ressource 13 correspond à un ensemble de symboles temps-fréquence.

Ainsi, la figure 1 illustre une représentation des unités de ressource (encore notées « URs ») dans une trame temps-fréquence OFDM, ces unités de ressource étant localisées en fréquence, c'est-à-dire qu'elles utilisent des sous-porteuses adjacentes. En effet, on rappelle que les URs peuvent être distribuées ou localisées en fréquence, et utiliser toute une trame en temps ou non.

Plus précisément, on considère un réseau mobile de type OFDM (par exemple un réseau WIMAX (« Worlwide Inter-Operability for Microwave Access »), pour lequel un découpage temps-fréquence en unités de ressource disjointes a été prédéfini. Un tel réseau est notamment présenté dans le document "Part16: Air Interface For Fixed Broadband Wireless Access Systems", IEEE Computer Society, Octobre 2004, et correspond à un système de communication courte durée basé sur une couche physique OFDM tel que décrite dans le document "Physical layer aspects for evolved Universal Terrestrial Radio Access (UTRA)", 3GPP Technical Specification Group Radio Access Network (R7), 3GPP TR25814 v7.0.0 (juin 2006).

On considère également un réseau cellulaire comprenant au moins une station de base et plusieurs terminaux mobiles associés à la ou aux station(s) de base, chacun de ces terminaux ayant une puissance de transmission limitée et plusieurs de ces terminaux cherchant à transmettre des données au même moment.

Les techniques actuelles d'allocation des ressources cherchent à optimiser les transmissions de données sur voie montante en jouant sur les paramètres suivants :

- le nombre d'unités de ressource ;
- le type de modulation et de codage (encore noté MCS, pour « Modulation and Coding scheme ») ;
- la position des URs dans la trame temps-fréquence ;
- la puissance de transmission allouée aux URs ;

afin de maximiser la capacité cellulaire du système.

Classiquement, ces techniques de l'art antérieur reposent sur le partage entre les différents terminaux du réseau (encore appelés mobiles) de la ressource en temps et en fréquence. Ainsi, les mobiles remontent régulièrement, à la station de base qui leur est associée, des informations concernant la qualité de leur canal de propagation et leurs besoins en débits. Une station de base peut également faire elle-même des mesures de qualité radio sur le lien montant, et utiliser l'ensemble des informations précédentes pour choisir le nombre, la position et la puissance de transmission des unités de ressource dans la trame temps-fréquence. La station de base déduit ensuite les schémas de transport associés à chaque mobile, en fonction du type de modulation et de codage (MCS) choisi, c'est-à-dire en suivant le principe d'adaptation de modulation et de codage (en anglais « link adaptation »).

Régulièrement, la station de base transmet aux mobiles présents dans la cellule qu'elle gère son choix pour les paramètres de transmission. Les mobiles peuvent alors transmettre des données en respectant l'allocation fixée par la station de base dont ils dépendent.

Plus précisément, on considère qu'il existe une liste de formats de transport supportés par mobile, c'est-à-dire pouvant être transmis par un mobile, en définissant un format de transport comme la combinaison d'un type de modulation et d'un taux de codage (MCS) avec un nombre fixe d'unités de ressource, auquel correspond donc un nombre de bits d'information (après décodage). Une telle liste de formats de transport supportés par un mobile est encore appelée liste autorisée.

Considérant une liste de formats de transport supportés par un mobile, et un choix de la taille de la bande de fréquence utilisée par le mobile, il est ainsi possible de déterminer une sous-liste de formats de transport que le mobile peut utiliser.

Ensuite, le mobile sélectionne parmi cette sous-liste un format de transport permettant de transmettre un maximum de données avec une qualité cible donnée (« link adaptation »).

On décrit plus précisément en relation avec la figure 2 une technique de sélection d'un format de transport pour allouer les ressources temps-fréquence, telle que proposée dans le document « System Analysis for UL SIMO SC-FDMA » (3GPP TSG-RAN WG1#45/R1-061525, Shangaï, Chine, 8-12 Mai, 2006, Qualcomm Europe).

On considère pour ce faire une station de base gérant une pluralité de mobiles (*M* mobiles). On note *B* la bande totale du système OFDM, et *Ns* le nombre de sous-porteuses associées.

Selon cette technique, la bande de fréquence $B_i$ utilisable par un mobile *i* est fixée et définie par :

$$B_i = \frac{P\,max}{PSD\,/\,CL},$$

avec :

- *Pmax* la puissance maximale de transmission disponible pour le mobile considéré ;
- PSD la densité spectrale de puissance cible du mobile à la réception ; et
- CL une variable prenant en compte les pertes de propagation et le gain d'antennes entre la station de base et le mobile.

Pour chaque mobile *i*, la sous-liste qui lui est associée est composée à partir de la liste de formats de transport supportés par le mobile, en ne gardant que les formats de transport pour lesquels la bande de fréquence occupée est égale à $B_i$.

Il en résulte que pour une densité spectrale en réception cible donnée, la bande totale utilisée est très grande (la plus élevée possible) et le nombre de mobiles transmettant simultanément est le plus faible possible.

Autrement dit, chaque mobile $M_1$, $M_2$, ..., $M_N$ dispose d'un nombre de sous-porteuses maximal (par exemple $\Delta_{max}$ le plus grand possible pour le mobile $M_1$), pour une densité spectrale de puissance cible donnée. Ainsi, si on considère *M* mobiles présents dans une cellule gérée par la station de base, *N* mobiles seulement pourront transmettre simultanément des données selon cette technique, avec *N* inférieur ou égal à *M*, et *N* relativement faible.

De plus, le nombre de sous-porteuses $N_0$ occupées pour la transmission sera élevé.

On constate ainsi que pour un mobile donné, la sous-liste ainsi constituée conduit à une utilisation d'une grande partie de la bande de fréquence totale du système de transmission, et à un nombre faible de mobiles transmettant simultanément. Les techniques de l'art antérieur cherchent donc à occuper l'ensemble de la bande de fréquence disponible pour les transmissions dans la trame temps-fréquence OFDM.

D'autres techniques de choix de la taille de la bande de fréquence utilisée par les mobiles du réseau ont également été envisagées par Yoon et al. (« Exploiting channel statistics to improve the average sum rate in OFDMA systems », Vehicular Technology Conférence, printemps 2005, IEEE 61, 30 mai - 1 juin 2005, volume 2, pages 1053 - 1057) et Sternad et al. (« Channel estimation and prediction for adaptive OFDMA/TDMA uplinks, based on overlapping pilots », Acoustics, Speech, and Signal Processing, 2005, Proceedings, IEEE International Conférence on, Volume 3, 18-23 Mars 2005, pages iii/861 - iii/864).

Selon ces deux techniques, la bande utilisable par un mobile du réseau est fixée et respectivement égale à *B/N* (où *N* est un nombre fixé arbitrairement et commun à tous les mobiles, souvent faible), et *B*. Il en résulte que la bande totale de fréquence utilisée est *B*, et le nombre de mobiles transmettant simultanément est respectivement égal à *N*, ou 1.

Selon ces différentes techniques de l'art antérieur, la sélection du format de transport associé à un mobile du réseau consiste ensuite à sélectionner le format de transport permettant de transmettre le maximum de données à transmettre pour une qualité cible donnée, en fonction des conditions radio et des données à transmettre, suivant le principe classique d'adaptation de lien.

Cependant, ces techniques de l'art antérieur génèrent deux principaux inconvénients, à savoir une large interférence cellulaire et une exploitation peu efficace de la capacité de transmission des mobiles.

En effet, le fait d'utiliser une large partie de la bande totale du système de transmission génère une interférence radio inter-cellulaire maximale, ce qui limite la capacité cellulaire du réseau considéré.

Par ailleurs, le fait d'étaler la puissance de transmission d'un mobile dans le domaine fréquentiel sur une large bande a pour conséquence que très peu de mobiles peuvent transmettre des données en même temps. Il en résulte que la capacité maximale de transmission de tous les mobiles n'est pas exploitée.

## 3. Exposé de l'invention

Le problème de l'invention consiste donc à proposer une solution permettant d'augmenter la capacité cellulaire d'un réseau de communication cellulaire sous la forme d'un procédé de gestion des ressources de transmission dans un réseau de communication cellulaire comprenant une pluralité de cellules associées chacune à une station de base, le réseau comprenant au moins deux terminaux de radiocommunication, une liste de formats de transport disponibles, dite liste autorisée, étant associée à chacun des terminaux.

Selon l'invention, un tel procédé comprend une étape d'optimisation des ressources en fréquence utilisées par les terminaux présents dans le réseau, comprenant des sous-étapes de :

- sélection d'un format de transport spécifique pour chacun des terminaux parmi une liste réduite de formats de transport, une liste réduite étant déterminée pour chacun des terminaux, et issue de la liste autorisée associée au terminal, et
- affectation d'une bande de fréquence à chacun des terminaux, dimensionnée en fonction du format de transport sélectionné.

Ainsi, l'invention repose sur une approche nouvelle et inventive de l'allocation des ressources pour les communications notamment sur voie montante, permettant d'augmenter la capacité cellulaire du réseau de manière simple et efficace.

Plus précisément, alors que, selon l'art antérieur, la taille de la bande de fréquence était préalablement fixée et entièrement utilisée, ce qui générait des problèmes d'interférence cellulaire, on cherche selon l'invention à optimiser la bande de fréquence utilisée.

Pour ce faire, l'invention propose d'optimiser les ressources en fréquence utilisées, en créant une liste réduite de formats de transport spécifique pour chacun des terminaux du réseau, chaque liste réduite étant optimisée en fréquence.

Ainsi, l'invention permet de diminuer la largeur de la bande de fréquence dans laquelle les interférences inter-cellulaires sont créées, tout en exploitant au maximum la bande utilisée par chaque terminal pour transmettre un maximum d'informations utiles ou de données.

Conjointement, l'invention permet d'utiliser la capacité de transmission d'un nombre maximum de mobiles, c'est-à-dire de permettre à un maximum de mobiles du réseau de transmettre simultanément à puissance maximale.

Selon un mode de réalisation particulier de l'invention, une liste réduite associée à un terminal est déterminée en sélectionnant dans la liste autorisée correspondant au terminal au moins un format de transport en fonction d'un critère optimisant l'efficacité spectrale et la quantité d'information que transporte ledit format de transport.

On entend ici par efficacité spectrale le ratio entre le nombre de bits d'information codés et le nombre de symboles temps-fréquence occupés.

Ainsi, la technique proposée permet d'optimiser le nombre d'unités de ressource à utiliser, et donc la taille de la bande de fréquence associée, pour un terminal donné et pour un nombre de bits d'information à transmettre donné.

Autrement dit, on cherche à construire une liste réduite optimisée en fréquence, c'est-à-dire permettant d'utiliser le moins de ressources en fréquence possible.

En particulier, le procédé de gestion selon l'invention met en oeuvre l'algorithme suivant, pour chaque terminal du réseau :

- initialisation d'une liste réduite vide ;
- parcours de la liste autorisée de formats de transport disponibles associée au terminal, et pour chaque format de transport :

    ■ s'il existe dans la liste autorisée un format de transport transportant un nombre de bits d'information codés inférieur ou égal au nombre de bits d'information codés transportés par ledit format de transport et ayant une efficacité spectrale supérieure à celle dudit format de transport,
    ■ alors passage au format de transport suivant dans ladite liste autorisée,
    ■ sinon, ajout dudit format de transport à ladite liste réduite, et passage au format de transport suivant dans ladite liste autorisée.

Ainsi, pour chaque terminal du réseau, on crée à partir d'une liste autorisée de formats de transport disponibles associée au terminal une liste réduite comprenant uniquement des formats de transport optimaux en terme d'usage de la bande de fréquence, pour un nombre de bits d'information donné.

Selon une caractéristique particulière de l'invention, la liste réduite est déterminée et mémorisée dans un équipement du réseau.

Selon une autre variante, la liste réduite est déterminée dynamiquement dans un équipement du réseau.

On considère notamment qu'un équipement du réseau peut être une station de base, un terminal, un noeud intermédiaire de réseau, etc.

En particulier, la liste réduite peut être transmise à un équipement du réseau mettant en oeuvre la sous-étape de sélection d'un format de transport associé audit terminal.

En effet, il est à noter que les différentes étapes peuvent être mises en oeuvre à des endroits distincts du réseau : par exemple la liste réduite associée à un terminal peut être déterminée au niveau de ce terminal, tandis que la sélection du format de transport spécifique pour ce terminal parmi la liste réduite peut être mise en oeuvre au niveau de la station de base gérant ce terminal. Il est donc nécessaire de transmettre cette liste réduite à la station de base, pour qu'elle puisse mettre en oeuvre la sous-étape de sélection.

En particulier, la liste réduite peut être transmise (par exemple du terminal vers la station de base) sous forme de signalisation.

L'invention est par exemple mise en oeuvre dans un réseau de type OFDMA, notamment pour la gestion des ressources en fréquence pour des liaisons sur voie montante.

Selon un autre aspect de l'invention, au moins une des cellules du réseau comprend au moins deux terminaux, et l'étape d'optimisation optimise les ressources en fréquence utilisées par les terminaux présents dans ladite cellule.

Ainsi, l'invention permet à la fois d'optimiser la bande de fréquence utilisée par les terminaux et d'exploiter au mieux leur capacité de transmission, que tous les terminaux soient présents dans une même cellule du réseau cellulaire ou dans des cellules distinctes du même réseau.

Autrement dit, si plusieurs terminaux sont présents dans une même cellule, le procédé de gestion est mis en oeuvre au niveau de la cellule, permettant une optimisation des ressources en fréquence au sein même de la cellule.

De plus, si plusieurs terminaux sont localisés dans différentes cellules du réseau, le procédé de gestion des ressources de transmission est implémenté dans chacune de ces cellules, conduisant à une optimisation des ressources en fréquence au sein de chaque cellule, et donc à une optimisation globale des ressources en fréquence du réseau.

Ainsi, il n'est pas nécessaire selon l'invention de disposer d'une entité supérieure permettant de gérer les différentes cellules du réseau, la technique de gestion des ressources selon l'invention étant implémentée de manière distribuée dans chacune des cellules.

L'invention concerne également selon un autre aspect un équipement du réseau (par exemple un terminal, une station de base, un noeud intermédiaire, ...) mettant en oeuvre au moins en partie le procédé de gestion selon l'invention.

Par exemple, l'invention concerne un terminal de radiocommunication destiné à être mis en oeuvre dans un réseau de communication cellulaire comprenant une pluralité de cellules associées chacune à une station de base, une liste de formats de transport disponibles, dite liste autorisée, étant associée au terminal.

Selon l'invention, un tel terminal comprend des moyens d'optimisation des ressources en fréquence qu'il utilise, comprenant :

- des moyens de sélection d'un format de transport spécifique pour ledit terminal parmi une liste réduite de formats de transport, la liste réduite étant issue de la liste autorisée associée audit terminal, et
- des moyens d'affectation d'une bande de fréquence audit terminal, dimensionnée en fonction du format de transport sélectionné.

Un tel terminal est notamment adapté à mettre en oeuvre au moins en partie le procédé de gestion tel que décrit précédemment.

Il s'agit par exemple d'un terminal de type radiotéléphone, ordinateur portable, assistant personnel de type PDA (en anglais «Personal Digital Assistant »), etc.

Selon un autre exemple, l'invention concerne une station de base destinée à être mise en oeuvre dans un réseau de communication cellulaire comprenant une pluralité de cellules, le réseau comprenant au moins deux terminaux de radiocommunication, une liste de formats de transport disponibles, dite liste autorisée, étant associée à chacun des terminaux.

Selon l'invention, une telle station de base comprend des moyens d'optimisation des ressources en fréquence utilisées par les terminaux présents dans ledit réseau, comprenant :

- des moyens de sélection d'un format de transport spécifique pour chacun desdits terminaux, parmi une liste réduite de formats de transport, une liste réduite étant déterminée pour chacun desdits terminaux, et issue de la liste autorisée associée audit terminal, et

- des moyens d'affectation d'une bande de fréquence à au moins un desdits terminaux, dimensionnée en fonction du format de transport sélectionné.

Une telle station de base est également adaptée à mettre en oeuvre au moins en partie le procédé de gestion tel que décrit précédemment.

En particulier, il est à noter que ces moyens peuvent être répartis dans différents équipements du réseau. Par exemple, un terminal peut comprendre des moyens de détermination d'une liste réduite qui lui est associée, et des moyens de transmission de cette liste réduite à un autre équipement du réseau, par exemple une station de base. La station de base peut quant à elle comprendre des moyens de sélection d'un format de transport parmi la liste réduite associée au terminal, et des moyens d'affectation d'une bande de fréquence audit terminal.

Bien entendu, il est également envisageable que ce soit la station de base (ou un autre équipement du réseau) qui détermine la liste réduite associée à un terminal, lui transmette cette liste réduite, puis que le terminal sélectionne un format de transport parmi cette liste réduite, indique cette sélection à la station de base, et que finalement la station de base affecte une bande de fréquence dimensionnée en fonction du format de transport sélectionné à ce terminal.

Finalement, un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre d'au moins certaines étapes du procédé de gestion décrit précédemment.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, discutée en relation avec l'art antérieur, illustre une représentation des unités de ressource dans une trame temps-fréquence OFDM ;
- la figure 2, également discutée en relation avec l'art antérieur, représente la répartition des ressources entre différents terminaux, dans une trame temps-fréquence OFDM, selon l'art antérieur ;
- la figure 3 représente la répartition des ressources entre différents terminaux, dans une trame temps-fréquence OFDM, selon un mode de réalisation de l'invention ;
- la figure 4 illustre un réseau cellulaire comprenant plusieurs terminaux, mettant en oeuvre le procédé de gestion selon la figure 3 ;
- la figure 5 présente un algorithme de détermination d'une liste réduite selon l'invention;
- la figure 6 illustre un exemple de listes réduites obtenues en utilisant l'algorithme de la figure 5 :
- la figure 7 présente la structure d'un dispositif mettant en oeuvre une technique de gestion des ressources de transmission selon un mode de réalisation particulier de l'invention.

### 5. Description d'un mode de réalisation de l'invention

*5.1 Principe général*

Le principe général de l'invention repose sur la détermination, pour chaque terminal d'un même réseau cellulaire, d'une liste réduite de formats de transport supportés par le terminal, et sur la sélection d'un format de transport parmi cette liste réduite que le terminal peut utiliser pour les communications avec la station de base qui le gère. L'utilisation de cette liste réduite selon l'invention conduit à une optimisation des ressources en fréquence utilisées par l'ensemble des terminaux du réseau.

Plus précisément, la sélection d'un format de transport parmi une liste réduite déterminée, pour les différents terminaux du réseau, permet de diminuer la bande de fréquence dans laquelle les interférences inter-cellulaires sont créées, tout en exploitant au mieux la bande utilisée pour transmettre un maximum de données. De plus, la technique proposée permet à un maximum de terminaux du réseau de transmettre des données simultanément, chacun à leur puissance maximale.

*5.2 Exemple de réalisation*

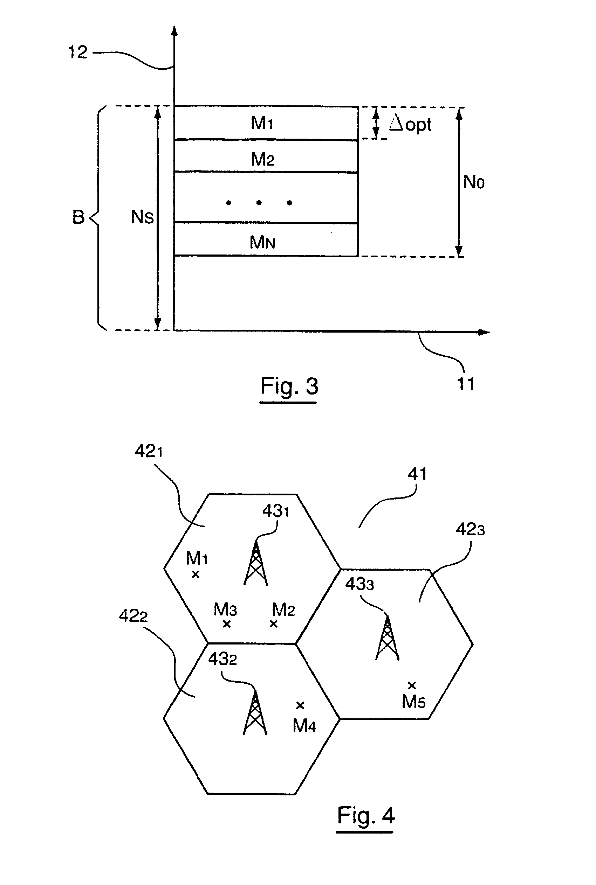

On présente désormais, en relation avec les figures 3 et 4, un exemple de réalisation de l'invention.

On considère pour ce faire un réseau de communication cellulaire 41 comprenant trois cellules $42_1$, $42_2$, et

$42_3$, associées chacune à une station de base, respectivement $43_1$, $43_2$, et $43_3$. Selon cet exemple, les terminaux $M_1$, $M_2$, et $M_3$, gérés par la première station de base $43_1$, sont localisés dans la première cellule $42_1$. Le terminal $M_4$, géré par la deuxième station de base $43_2$, est localisé dans la deuxième cellule $42_2$. Finalement, le terminal $M_5$, géré par la troisième station de base $43_1$, est localisé dans la troisième cellule $42_3$.

Bien entendu, l'invention s'applique également à des réseaux comprenant un nombre plus important de cellules et/ou de terminaux.

On suppose par ailleurs qu'une liste autorisée de formats de transport disponibles, c'est-à-dire de formats de transport supportés par un terminal, est associée à chacun des terminaux $M_1$ à $M_5$.

On cherche selon ce mode de réalisation particulier de l'invention à optimiser les ressources en fréquence utilisées par les terminaux présents dans le réseau, pour gérer les ressources de transmission du réseau.

Pour ce faire, selon ce mode de réalisation particulier de l'invention, on détermine pour chacun des terminaux $M_1$ à $M_5$ une liste réduite distincte optimisée en fréquence.

Plus précisément, pour un terminal donné, par exemple le terminal $M_2$, une liste réduite des formats de transport, optimaux en terme d'usage de la bande de fréquence pour un nombre de bits d'information donné, est déterminée à partir de la liste autorisée associée au terminal $M_2$.

Cette liste réduite peut être prédéterminée pour au moins certains des terminaux, et mémorisée dans un équipement du réseau 41, par exemple au niveau de la première station de base $43_1$ ou du terminal $M_2$, pour la liste réduite associée au terminal $M_2$, ou encore au niveau d'un noeud intermédiaire du réseau.

Cette liste réduite peut également être déterminée de manière dynamique pour au moins certains des terminaux du réseau 41, par exemple au niveau de la première station de base $43_1$ ou du terminal $M_2$, pour la liste réduite associée au terminal $M_2$, ou encore au niveau d'un noeud intermédiaire du réseau.

Cette liste réduite est ensuite communiquée à l'équipement du réseau 41 mettant en oeuvre la sélection d'un format de transport spécifique pour le terminal, parmi la liste réduite. Cette liste réduite peut notamment être transmise sous forme de signalisation.

Par exemple, si on considère que le terminal $M_2$ comprend une mémoire stockant la liste réduite qui lui est associée, mais que c'est la station de base $43_1$ qui met en oeuvre l'étape de sélection du format de transport pour ce terminal, le terminal $M_2$ doit transmettre à la station de base $43_1$ cette liste réduite.

En particulier, si la détermination de la liste réduite et la sélection d'un format de transport parmi cette liste réduite sont mises en oeuvre dans le même équipement, il n'est pas nécessaire de transmettre la liste réduite à un autre équipement du réseau.

Finalement, un format de transport est sélectionné pour chacun des terminaux, en fonction des conditions radio et du nombre de bits à transmettre. On affecte ainsi à chacun des terminaux une bande de fréquence dimensionnée en fonction du format de transport sélectionné.

Par exemple, la sélection d'un format de transport optimisé parmi une liste réduite comprend les étapes suivantes :

- détermination des rapports signaux à interférents (SIR) pour chaque format de transport de la liste réduite ;
- détermination des SIR atteignables pour chaque format de transport de la liste réduite. On appelle « SIR atteignable » le SIR qui serait atteint si la puissance de transmission maximale disponible pour un terminal était allouée aux unités de ressource du format de transport considéré. Cette notion est notamment définie dans le document "Feasibility Study for Enhanced Uplink for UTRA FDD; (R6) ", 3GPP TR25896-600, mars 2004, présentant une technique basée sur le contrôle de puissance de canaux de contrôle et une mesure de la puissance disponible à l'émission ;
- en notant $N_t$ le nombre de bits à transmettre par le terminal, sélection dans la liste réduite du format de transport permettant de transmettre $N_t$ bits ou un maximum de bits parmi les $N_t$, et ayant un SIR atteignable supérieur au SIR cible ;
- détermination de la puissance de transmission nécessaire pour atteindre le SIR cible du format de transport sélectionné.

On détermine ainsi, pour chaque terminal, un format de transport optimisé et une puissance de transmission nécessaire.

En particulier, on considère que cette étape de sélection du format de transport le mieux adapté, et de la puissance de transmission du terminal, est effectuée dans un équipement du réseau, et plus précisément dans le terminal et/ou la station de base. Si cette sélection est effectuée dans le terminal, celui-ci devra transmettre le résultat de cette étape à la station de base qui le gère (c'est-à-dire le format de transport sélectionné), pour que la station de base puisse choisir les positions des unités de ressource de chaque terminal du réseau au sein de la trame OFDM.

Ainsi, on suppose que la liste réduite de formats de transport déterminée précédemment est disponible dans un équipement du réseau, et que, pour chaque format de transport, le SIR cible a été défini ou est calculable par cet équipement, et le SIR atteignable peut être déterminé par cet équipement.

L'équipement sélectionne alors, parmi la liste réduite, le format de transport permettant de transmettre les informations utiles (données à transmettre) ou un maximum de ces données, et pour lequel le SIR atteignable est supérieur à la valeur cible du SIR. S'il n'existe pas de tel format de transport, l'équipement décide de ne pas transmettre de données ou de transmettre avec le format de transport dont le SIR est le plus élevé. Finalement, l'équipement choisit la puissance de transmission minimale nécessaire pour atteindre le SIR cible du format de transport sélectionné.

Ainsi, la figure 3 représente la répartition des ressources entre différents terminaux $M_1$ à $M_N$, dans une trame temps-fréquence OFDM.

Considérant un réseau gérant une pluralité de mobiles (*M* mobiles) et notant *B* la bande totale du système OFDM, et *Ns* le nombre de sous-porteuses associées, on constate selon ce mode de réalisation particulier de l'invention que la bande de fréquence $B_i$ utilisable par un mobile *i* est optimisée. Chaque mobile $M_1$, $M_2$, ..., $M_N$ utilise donc un nombre de sous-porteuses optimisé ($\Delta_{opt}$ pour le mobile $M_1$).

Il en résulte que pour un mobile donné, et pour un nombre de bits d'information à transmettre donné, la technique proposée permet d'optimiser le nombre d'unités de ressource à utiliser dans la trame temps-fréquence, et donc d'optimiser la taille de la bande associée (en la diminuant par rapport aux techniques de l'art antérieur).

Ainsi, si on considère *M* mobiles présents dans un réseau, *N* mobiles pourront transmettre simultanément des données selon cette technique, avec *N* inférieur ou égal à *M*, et *N* élevé (assez proche de *M*).

De plus, le nombre de sous-porteuses $N_0$ occupées pour la transmission est faible, en comparaison avec les techniques de l'art antérieur.

*5.3 Détermination d'une liste réduite*

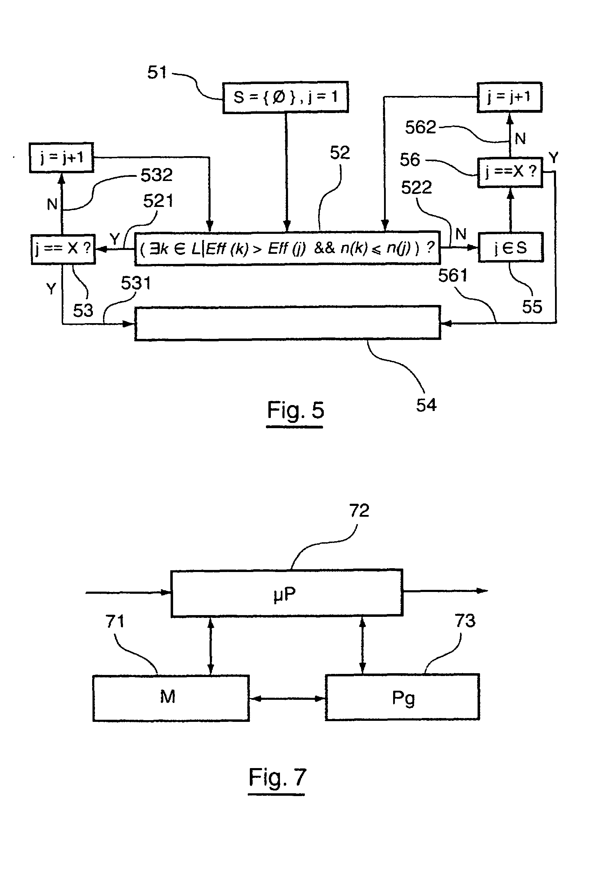

On décrit désormais, en relation avec la figure 5, un exemple d'algorithme de détermination d'une liste réduite, pour un terminal donné.

Plus précisément, on rappelle que la liste réduite est issue d'une liste de formats de transport disponibles associée au terminal considéré, dite liste autorisée. Cette liste réduite est déterminée en sélectionnant dans la liste autorisée au moins un format de transport en fonction d'un critère optimisant l'efficacité spectrale et la quantité d'information qu'il transporte.

Selon l'algorithme proposé, un format de transport est inclus dans la liste réduite si et seulement si il n'existe pas, dans la liste autorisée des formats de transport supportés par le terminal considéré, d'autres formats de transport permettant de transmettre une quantité d'information identique ou inférieure avec un type de modulation et de codage (MCS) ayant une efficacité spectrale plus grande. On rappelle qu'on définit ici l'efficacité spectrale comme le ratio entre le nombre de bits d'information codés transportés par le format de transport et le nombre de symboles temps-fréquence occupés.

En particulier, on considère pour un terminal $M_1$ :

- *X* le nombre de formats de transport supportés par le terminal $M_1$, formant la liste autorisée associée au terminal $M_1$ ;
- pour chaque format de transport *j* de 1 à *X* :

    ■ *eff(j)* l'efficacité spectrale du format de transport *j* ;
    ■ *n(j)* le nombre de bits d'information codés transportés par le format de transport *j* ;

- *L* la liste autorisée de formats de transport : *L* = {1,...,X} ; et
- *S* la liste réduite de formats de transport optimaux associée au terminal $M_1$.

En relation avec la figure 5, au cours d'une première étape 51, on initialise une liste réduite *S* vide, telle que :

$$S = \left\{ k \in L \middle| T(k) = 0 \right\}$$

$$F(k) = \left\{ j \in L \middle| n(j) \leq n(k) \text{ et } eff(j) > eff(k) \right\}$$

$$T(k) = nbre\_d'elements\_de\_F(k)$$

On parcourt alors la liste autorisée *L* associée au terminal $M_1$ considéré, pour chaque format de transport *j* de 1 à X.

Au cours de l'étape d'initialisation 51, on a donc : $j = 1$.

Au cours d'une étape de test 52, on vérifie s'il existe un format de transport $k$ dans la liste autorisée $L$ tel que $eff(k) > eff(j)$ et $n(k) \leq n(j)$ :

■ si c'est effectivement le cas (521), alors on vérifie si le format de transport $j$ considéré est le dernier de la liste autorisée dans un test 53 :

o dans l'affirmative (531), on considère que la liste réduite S est entièrement déterminée, au cours d'une étape 54 ;
o dans la négative (532), on passe au format de transport suivant dans la liste autorisée ($j=j+1$), puis on reboucle sur l'étape de test 52.

Le format de transport $j$ considéré n'est donc pas ajouté à la liste réduite *S*.

■ si ce n'est pas le cas (522), c'est-à-dire si $n(j) < n(k)$ ou si $eff(j) \geq eff(k)$, alors le format de transport $j$ est inséré dans la liste réduite S au cours d'une étape 55. On vérifie ensuite au cours d'un test 56 si le format de transport $j$ considéré est le dernier de la liste autorisée :

o dans l'affirmative (561), on considère que la liste réduite S est entièrement déterminée, au cours d'une étape 54 ;
o dans la négative (562), on passe au format de transport suivant dans la liste autorisée ($j = j + 1$), puis on reboucle sur l'étape de test 52.

Ainsi, l'étape 54 correspond à un état final, dans lequel la liste réduite $S$ associée au terminal $M_1$ est déterminée.

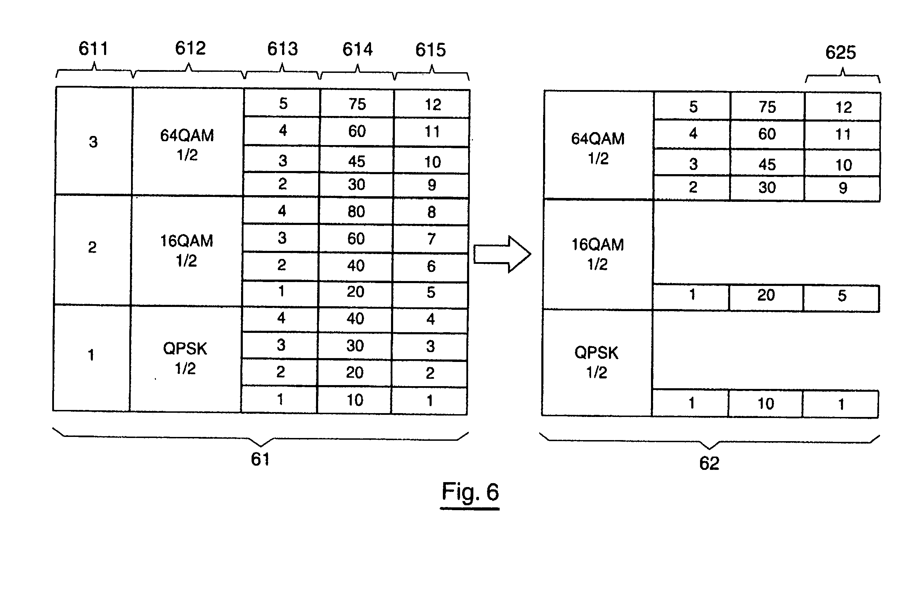

La figure 6 illustre un exemple de liste autorisée de formats de transport 61 associée à un mobile $M_1$, comprenant douze formats de transport 615 identifiés par les identifiants 1 à 12, et de liste réduite associée à ce même terminal, ne comprenant plus que six formats de transport 625 identifiés par les identifiants 1, 5, 9, 10, 11, et 12, suite à la mise en oeuvre de l'algorithme décrit en relation avec la figure 5 par exemple.

Plus précisément, la figure 6 indique l'identifiant 615 associé à un format de transport en fonction :

■ de son efficacité spectrale 611 (par exemple de valeur 1, 2, ou 3) ;
■ du schéma de modulation et de codage MCS 612 (par exemple une modulation d'amplitude en quadrature QAM64 de rendement ½, une modulation d'amplitude en quadrature QAM16 de rendement ½, ou encore une modulation de phase QPSK de rendement ½) ;
■ du nombre d'unités de ressource utilisées 613 ;
■ du nombre de bits d'information.

Selon l'algorithme présenté précédemment, on parcourt la liste autorisée 61 des formats de transport pour déterminer, pour chaque format de transport identifié de 1 à 12, s'il existe dans la liste autorisée un format de transport transportant un nombre de bits d'information codés inférieur ou égal au nombre de bits d'information codés transportés par le format de transport courant et ayant une efficacité spectrale supérieure à celle du format de transport courant. Si c'est effectivement le cas, le format de transport courant n'appartient pas à la liste réduite, et on passe au format de transport suivant dans la liste autorisée.

En appliquant cet algorithme, seuls les formats de transport identifiés par les identifiants 1, 5, 9, 10, 11 et 12 appartiennent à la liste réduite ainsi déterminée.

Comme précédemment indiqué, la technique proposée permet ainsi de choisir un format de transport pour un terminal parmi une liste réduite, permettant ainsi de minimiser la quantité de ressources en fréquence utilisées, pour n'importe quel mobile et nombre de bits donnés.

*5.4 Exemple d'application de l'invention dans un système OFDM*

On décrit ci-après un exemple d'application de l'invention dans un système OFDM complet.

Selon cet exemple, on utilise un algorithme classique d'ordonnancement des mobiles, et de choix des unités de ressource. Plus précisément, l'allocation des ressources de transmission dans un réseau de communication comprend les étapes suivantes :

- sélection d'un format de transport optimisé pour chaque terminal, choisi parmi une liste réduite associée au terminal, comme décrit précédemment en relation avec la description d'un mode particulier de réalisation de l'invention ;

- ordonnancement des terminaux, créant une liste de mobiles ordonnés respectant des règles de priorité ;
- choix des positions des unités de ressource, complétant la trame OFDM au fur et à mesure, en considérant tour à tour chaque mobile du réseau et en procédant par ordre de priorité décroissante. Plus précisément, pour un mobile donné, les positions des unités de ressource (URs) sont choisies en respectant le nombre de URs nécessaire pour le format de transport sélectionné.

On peut notamment remarquer que les deux premières étapes peuvent être mises en oeuvre simultanément ou successivement, mais que la troisième étape ne peut être effectuée qu'une fois les deux premières étapes réalisées.

Plus précisément, l'exemple présenté ci-après concerne un réseau WIMAX, pour lequel un découpage temps-fréquence en unités de ressource disjointes a été prédéfini.

Par exemple, à un instant donné, une station de base détermine les ressources qui pourront être allouées à une future trame.

Au cours d'une étape préalable (notée étape 0), la trame est pré-remplie avec des communications entre un terminal et une station de base non sujettes à l'optimisation de la bande. Par exemple, en supposant que des mécanismes d'HARQ synchrones sont utilisés (en anglais « Hybrid Automatic Repeat Request »), on alloue des ressources aux retransmissions : le même nombre de URs et la même puissance est allouée que pour la première transmission.

Au cours d'une étape suivante, notée étape 1, les nouvelles transmissions sont ordonnées.

Plus précisément :

- la station de base fait une liste ordonnée des utilisateurs des terminaux nécessitant de nouvelles transmissions ;
- les terminaux sont ordonnés suivant une priorité croissante. En particulier, la priorité peut être déterminée suivant des métriques très variées, telles que celles proposées dans le document Qualcomm cité précédemment (par exemple « Proportionnal Fair Scheduler », « Round Robin », ou encore « Max Channel Quality », etc...) ;

On note à cet égard que le choix de l'ordonnancement est indépendant de la technique de gestion des ressources de transmission proposée selon l'invention.

Au cours d'une étape suivante, notée étape 2, on sélectionne un format spécifique pour chaque terminal parmi la liste réduite associée à chaque terminal.

Plus précisément, pour chaque utilisateur de la liste ordonnée citée précédemment, la station de base sélectionne le format de transport associé au terminal de l'utilisateur, selon la technique décrite, et détermine la puissance de transmission du terminal associée à ce format de transport.

On connaît donc, à l'issue de cette étape, le nombre des URs nécessaires pour chaque terminal appartenant à la liste ordonnée.

Finalement, au cours d'une troisième étape, notée étape 3, on peut choisir les positions des URs et remplir la trame correspondante.

Ainsi, pour chaque terminal de la liste ordonnée associé à un format de transport spécifique :

- la station de base considère tour à tour chacun des terminaux en suivant l'ordre décroissant de priorité, jusqu'à ce que tous les terminaux aient été traités, ou que le critère de remplissage soit satisfait. En particulier, tout critère de remplissage peut être utilisé, appartenant par exemple au groupe comprenant :

  ■ la trame est entièrement remplie ;
  ■ le taux d'occupation de la trame est supérieur à un seuil prédéterminé ;
  ■ une puissance totale maximum prédite en réception est atteinte.

- pour chaque terminal, la station de base qui le gère alloue le nombre de URs déterminé à l'étape 2, et choisit la position de ces unités de ressource dans la trame. En particulier, différents algorithmes connus peuvent être mis en oeuvre. Par exemple, la position des URs dans la trame peut être choisie telle que :

  ■ les fréquences occupées sont voisines ou éloignées ;
  ■ les fréquences occupées dans deux cellules distinctes sont proches ou éloignées, suivant que le remplissage de la trame temps-fréquence prédéterminé suit un schéma identique dans toutes les cellules ou distinct ;
  ■ les fréquences occupées sont pseudo aléatoires ;
  ■ les fréquences occupées par chaque terminal présentent la meilleure qualité du lien.
  ■ etc.

*5.5 Structure d'un équipement du réseau pour la gestion des ressources de transmission*

On présente finalement, en relation avec la figure 7, la structure simplifiée d'un équipement du réseau pour la gestion des ressources de transmission selon le mode de réalisation particulier décrit précédemment.

Un tel équipement comprend une mémoire 71, une unité de traitement 72, équipée par exemple d'un microprocesseur $\mu$P, et pilotée par le programme d'ordinateur 73, mettant en oeuvre le procédé de gestion des ressources de transmission selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée au moins une liste des terminaux présents dans le réseau. Le microprocesseur de l'unité de traitement 72 met en oeuvre les étapes du procédé de gestion des ressources décrit précédemment, selon les instructions du programme d'ordinateur 73, pour déterminer une liste réduite de format de transport associée à chacun des terminaux, et sélectionner un format de transport spécifique parmi ces listes réduites. Pour cela, l'équipement comprend des moyens de sélection d'un format de transport spécifique pour chacun des terminaux, parmi une liste réduite de formats de transport, une liste réduite étant déterminée pour chacun des terminaux, et issue d'une liste autorisée de formats de transport associée au terminal, et des moyens d'affectation d'une bande de fréquence aux terminaux, dimensionnée en fonction du format de transport sélectionné. Ces moyens sont pilotés par le microprocesseur de l'unité de traitement 72.

L'unité de traitement 72 délivre donc en sortie une trame OFDM dans laquelle l'allocation des ressources en fréquence est optimisée.

**Revendications**

1. Procédé de gestion des ressources de transmission dans un réseau de communication cellulaire (41) comprenant une pluralité de cellules ($42_1$, $42_2$, $42_3$) associées chacune à une station de base ($43_1$, $43_2$, $43_3$), ledit réseau comprenant au moins deux terminaux de radiocommunication ($M_1$, $M_2$ $M_3$ $M_4$ $M_5$), une liste (L) de formats de transport disponibles, dite liste autorisée, étant associée à chacun desdits terminaux,
   **caractérisé en ce que** ledit procédé comprend une étape d'optimisation des ressources en fréquence utilisées par lesdits terminaux présents dans ledit réseau, comprenant des sous-étapes de :

   - sélection d'un format de transport spécifique pour chacun desdits terminaux parmi une liste réduite (S) de formats de transport, une liste réduite étant déterminée pour chacun desdits terminaux, et issue de la liste autorisée associée audit terminal, et
   - affectation d'une bande de fréquence à chacun desdits terminaux, dimensionnée en fonction du format de transport sélectionné.

2. Procédé de gestion selon la revendication 1, **caractérisé en ce que** ladite liste réduite (S) est déterminée en sélectionnant dans la liste autorisée (L) correspondant audit terminal ($M_1$, $M_2$ $M_3$ $M_4$ $M_5$) au moins un format de transport en fonction d'un critère optimisant l'efficacité spectrale et la quantité d'information que transporte ledit format de transport.

3. Procédé de gestion selon l'une quelconque des revendications 1 et 2, **caractérisé en ce qu'**il met en oeuvre l'algorithme suivant :

   - initialisation d'une liste réduite (S) vide ;
   - parcours de la liste autorisée (L) de formats de transport disponibles associée audit terminal ($M_1$, $M_2$ $M_3$ $M_4$ $M_5$), et pour chaque format de transport :

     ■ s'il existe dans ladite liste autorisée un format de transport transportant un nombre de bits d'information codés inférieur ou égal au nombre de bits d'information codés transportés par ledit format de transport et ayant une efficacité spectrale supérieure à celle dudit format de transport,
     ■ alors passage au format de transport suivant dans ladite liste autorisée,
     ■ sinon, ajout dudit format de transport à ladite liste réduite, et passage au format de transport suivant dans ladite liste autorisée.

4. Procédé de gestion selon l'une quelconque des revendications 1 à 3, **caractérisé en ce que** ladite liste réduite (S) est déterminée et mémorisée dans un équipement dudit réseau.

**5.** Procédé de gestion selon l'une quelconque des revendications 1 à 3, **caractérisé en ce que** ladite liste réduite (S) est déterminée dynamiquement dans un équipement dudit réseau.

**6.** Procédé de gestion selon l'une quelconque des revendications 1 à 5, **caractérisé en ce que** ladite liste réduite (S) est transmise à un équipement dudit réseau mettant en oeuvre ladite sous-étape de sélection d'un format de transport associé audit terminal.

**7.** Procédé de gestion selon l'une quelconque des revendications 1 à 6, **caractérisé en ce que** ledit réseau (41) est de type OFDMA.

**8.** Procédé de gestion selon l'une quelconque des revendications 1 à 7, **caractérisé en ce qu'**il assure la gestion des ressources en fréquence pour des liaisons sur voie montante.

**9.** Procédé de gestion selon l'une quelconque des revendications 1 à 8, **caractérisé en ce qu'**au moins une des cellules ($42_1, 42_2, 42_3$) dudit réseau (41) comprend au moins deux terminaux ($M_1, M_2 M_3 M_4 M_5$), et **en ce que** ladite étape d'optimisation optimise les ressources en fréquence utilisées par lesdits terminaux présents dans ladite cellule.

**10.** Terminal de radiocommunication destiné à être mis en oeuvre dans un réseau de communication cellulaire (41) comprenant une pluralité de cellules ($42_1, 42_2, 42_3$) associées chacune à une station de base ($43_1, 43_2, 43_3$), une liste (L) de formats de transport disponibles, dite liste autorisée, étant associée audit terminal, **caractérisé en ce que** ledit terminal comprend des moyens d'optimisation des ressources en fréquence utilisées par ledit terminal présent dans ledit réseau, comprenant :

- des moyens de sélection d'un format de transport spécifique pour ledit terminal parmi une liste réduite (S) de formats de transport, ladite liste réduite étant issue de la liste autorisée associée audit terminal, et
- des moyens d'affectation d'une bande de fréquence audit terminal, dimensionnée en fonction du format de transport sélectionné.

**11.** Station de base destinée à être mise en oeuvre dans un réseau de communication cellulaire (41) comprenant une pluralité de cellules ($42_1, 42_2, 42_3$), ledit réseau comprenant au moins deux terminaux de radiocommunication ($M_1, M_2 M_3 M_4 M_5$), une liste (L) de formats de transport disponibles, dite liste autorisée, étant associée à chacun desdits terminaux,
**caractérisé en ce que** ladite station de base comprend des moyens d'optimisation des ressources en fréquence utilisées par lesdits terminaux présents dans ledit réseau, comprenant :

- des moyens de sélection d'un format de transport spécifique pour chacun desdits terminaux, parmi une liste réduite (S) de formats de transport, une liste réduite étant déterminée pour chacun desdits terminaux, et issue de la liste autorisée associée audit terminal, et
- des moyens d'affectation d'une bande de fréquence à au moins un desdits terminaux, dimensionnée en fonction du format de transport sélectionné.

**12.** Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de gestion selon l'une quelconque des revendications 1 à 9.

**Claims**

**1.** Method for managing the transmission resources in a cellular communication network (41) comprising a plurality of cells ($42_1, 42_2, 42_3$) each associated with a base station ($43_1, 43_2, 43_3$), said network comprising at least two radiocommunication terminals ($M_1, M_2 M_3 M_4 M_5$), a list (L) of available transport formats, termed the authorized list, being associated with each of said terminals,
**characterized in that** said method comprises a step of optimizing the frequency resources used by said terminals present in said network, comprising sub-steps of:

- selection of a specific transport format for each of said terminals from among a reduced list (S) of transport formats, a reduced list being determined for each of said terminals, and arising from the authorized list associated with said terminal, and

- assignment of a frequency band to each of said terminals, said band being dimensioned as a function of the transport format selected.

2. Management method according to Claim 1, **characterized in that** said reduced list (S) is determined by selecting from the authorized list (L) corresponding to said terminal ($M_1$, $M_2$ $M_3$ $M_4$ $M_5$) at least one transport format as a function of a criterion optimizing the spectral efficiency and the quantity of information transported by said transport format.

3. Management method according to either one of Claims 1 and 2, **characterized in that** it implements the following algorithm:

   - initialization of an empty reduced list (S);
   - traversal of the authorized list (L) of available transport formats which is associated with said terminal ($M_1$, $M_2$ $M_3$ $M_4$ $M_5$), and for each transport format:

     • if there exists in said authorized list a transport format transporting a number of coded information bits that is less than or equal to the number of coded information bits transported by said transport format and having a spectral efficiency that is greater than that of said transport format,
     • then switch to the next transport format in said authorized list,
     • otherwise, addition of said transport format to said reduced list, and switch to the next transport format in said authorized list.

4. Management method according to any one of Claims 1 to 3, **characterized in that** said reduced list (S) is determined and stored in an item of equipment of said network.

5. Management method according to any one of Claims 1 to 3, **characterized in that** said reduced list (S) is determined dynamically in an item of equipment of said network.

6. Management method according to any one of Claims 1 to 5, **characterized in that** said reduced list (S) is transmitted to an item of equipment of said network implementing said sub-step of selecting a transport format associated with said terminal.

7. Management method according to any one of Claims 1 to 6, **characterized in that** said network (41) is of OFDMA type.

8. Management method according to any one of Claims 1 to 7, **characterized in that** it ensures the management of the frequency resources for up-path links.

9. Management method according to any one of Claims 1 to 8, **characterized in that** at least one of the cells ($42_1$, $42_2$, $42_3$) of said network (41) comprises at least two terminals ($M_1$, $M_2$ $M_3$ $M_4$ $M_5$), and **in that** said optimization step optimizes the frequency resources used by said terminals present in said cell.

10. Radiocommunication terminal intended to be implemented in a cellular communication network (41) comprising a plurality of cells ($42_1$, $42_2$, $42_3$) each associated with a base station ($43_1$, $43_2$, $43_3$), a list (L) of available transport formats, termed the authorized list, being associated with said terminal, **characterized in that** said terminal comprises means for optimizing the frequency resources used by said terminal present in said network, comprising:

    - means for selecting a specific transport format for said terminal from among a reduced list (S) of transport formats, said reduced list arising from the authorized list associated with said terminal, and
    - means for assigning a frequency band to said terminal, said band being dimensioned as a function of the transport format selected.

11. Base station intended to be implemented in a cellular communication network (41) comprising a plurality of cells ($42_1$, $42_2$, $42_3$), said network comprising at least two radiocommunication terminals ($M_1$, $M_2$ $M_3$ $M_4$ $M_5$), a list (L) of available transport formats, termed the authorized list, being associated with each of said terminals, **characterized in that** said base station comprises means for optimizing the frequency resources used by said terminals present in said network, comprising:

- means for selecting a specific transport format for each of said terminals, from among a reduced list (S) of transport formats, a reduced list being determined for each of said terminals, and arising from the authorized list associated with said terminal, and
- means for assigning a frequency band to at least one of said terminals, said band being dimensioned as a function of the transport format selected.

12. Computer program product downloadable from a communication network and/or recorded on a medium readable by computer and/or executable by a processor, **characterized in that** it comprises program code instructions for the implementation of the management method according to any one of Claims 1 to 9.

**Patentansprüche**

1. Verfahren z u r Verwaltung d e r Übertragungsressourcen in einem zellularen Kommunikationsnetzwerk (41), das mehrere Zellen ($42_1$, $42_2$, $42_3$) enthält, die je einer Basisstation ($43_1$, $43_2$, $43_3$) zugeordnet sind, wobei das Netzwerk mindestens zwei Funkverkehr-Endgeräte ($M_1$, $M_2$, $M_3$, $M_4$, $M_5$) enthält, wobei jedem der Endgeräte eine Liste (L) von verfügbaren Transportformaten, autorisierte Liste genannt, zugeordnet ist, **dadurch gekennzeichnet, dass** das Verfahren einen Schritt der Optimierung der von den im Netzwerk vorhandenen Endgeräte verwendeten Frequenzressourcen enthält, der folgende Teilschritte enthält:

   - Auswahl eines spezifischen Transportformats für jedes der Endgeräte aus einer reduzierten Liste (S) von Transportformaten, wobei eine reduzierte Liste für jedes der Endgeräte bestimmt wird und von der dem Endgerät zugeordneten autorisierten Liste stammt, und
   - Zuweisung eines Frequenzbands zu jedem der Endgeräte, das abhängig vom ausgewählten Transportformat bemessen ist.

2. Verwaltungsverfahren nach Anspruch 1, **dadurch gekennzeichnet, dass** die reduzierte Liste (S) bestimmt wird, indem in der autorisierten Liste (L) entsprechend dem Endgerät ($M_1$, $M_2$, $M_3$, $M_4$, $M_5$) mindestens ein Transportformat abhängig von einem Kriterium ausgewählt wird, das die spektrale Effizienz und die Informationsmenge optimiert, die das Transportformat transportiert.

3. Verwaltungsverfahren nach einem der Ansprüche 1 und 2, **dadurch gekennzeichnet, dass** es den folgenden Algorithmus durchführt:

   - Initialisierung einer leeren reduzierten Liste (S) ;
   - Durchlaufen der autorisierten Liste (L) von verfügbaren Transportformaten, die dem Endgerät ($M_1$, $M_2$, $M_3$, $M_4$, $M_5$) zugeordnet ist, und für jedes Transportformat:

      • wenn es in der autorisierten Liste ein Transportformat gibt, das eine Anzahl von codierten Informationsbits geringer als die oder gleich der Anzahl von codierten Informationsbits transportiert, die vom Transportformat transportiert werden, und eine spektrale Effizienz größer als diejenige des Transportformats hat,
      • Übergang zum folgenden Transportformat in der autorisierte Liste,
      • sonst, Hinzufügen des Transportformats zur reduzierten Liste und Übergang zum folgenden Transportformat in der autorisierten Liste.

4. Verwaltungsverfahren nach einem der Ansprüche 1 bis 3, **dadurch gekennzeichnet, dass** die reduzierte Liste (S) in einer Ausrüstung des Netzwerks bestimmt und gespeichert wird.

5. Verwaltungsverfahren nach einem der Ansprüche 1 bis 3, **dadurch gekennzeichnet, dass** die reduzierte Liste (S) in einer Ausrüstung des Netzwerks dynamisch bestimmt wird.

6. Verwaltungsverfahren nach einem der Ansprüche 1 bis 5, **dadurch gekennzeichnet, dass** die reduzierte Liste (S) an eine Ausrüstung des Netzwerks übertragen wird, die den Teilschritt der Auswahl eines dem Endgerät zugeordneten Transportformats durchführt.

7. Verwaltungsverfahren nach einem der Ansprüche 1 bis 6, **dadurch gekennzeichnet, dass** das Netzwerk (41) von der Art OFDMA ist.

**8.** Verwaltungsverfahren nach einem der Ansprüche 1 bis 7, **dadurch gekennzeichnet, dass** es die Verwaltung der Frequenzressourcen für Upstream-Verbindungen gewährleistet.

**9.** Verwaltungsverfahren nach einem der Ansprüche 1 bis 8, **dadurch gekennzeichnet, dass** mindestens eine der Zellen ($42_1$, $42_2$, $42_3$) des Netzwerks (41) mindestens zwei Endgeräte ($M_1$, $M_2$, $M_3$, $M_4$, $M_5$) enthält, und dass der Optimierungsschritt die von den in der Zelle Vorhandenen Endgeräten verwendeten Frequenzressourcen optimiert.

**10.** Funkverkehr-Endgerät, das dazu bestimmt ist, in einem zellularen Kommunikationsnetzwerk (41) verwendet zu werden, das mehrere Zellen ($42_1$, $42_2$, 423) enthält, die je einer Basisstation ($43_1$, $43_2$, $43_3$) zugeordnet sind, wobei eine Liste (L) von verfügbaren Transportformaten, autorisierte Liste genannt, dem Endgerät zugeordnet ist,
**dadurch gekennzeichnet, dass** das Endgerät Optimierungseinrichtungen der vom im Netzwerk vorhandenen Endgerät verwendeten Frequenzressourcen enthält, die enthalten:

- Einrichtungen zur Auswahl eines spezifischen Transportformats für das Endgerät aus einer reduzierten Liste (S) von Transportformaten, wobei die reduzierte Liste aus der dem Endgerät zugeordneten autorisierten Liste stammt, und
- Einrichtungen zur Zuweisung eines Frequenzbands zum Endgerät, das abhängig vom ausgewählten Transportformat bemessen ist.

**11.** Basisstation, die dazu bestimmt ist, von einem zellularen Kommunikationsnetzwerk (41) eingesetzt zu werden, das mehrere Zellen ($42_1$, $42_2$, $42_3$) enthält, wobei das Netzwerk mindestens zwei Funkverkehr-Endgeräte ($M_1$, $M_2$, $M_3$, $M_4$, $M_5$) enthält, wobei eine Liste (L) von verfügbaren Transportformaten, autorisierte Liste genannt, jedem der Endgeräte zugeordnet ist,
**dadurch gekennzeichnet, dass** die Basisstation Einrichtungen zur Optimierung der von den im Netzwerk vorhandenen Endgeräten verwendeten Frequenzressourcen enthält, die enthalten:

- Einrichtungen zur Auswahl eines für jedes der Endgeräte spezifischen Transportformats aus einer reduzierten Liste (S) von Transportformaten, wobei eine reduzierte Liste für jedes der Endgeräte bestimmt wird und aus der dem Endgerät zugeordneten autorisierten Liste stammt, und
- Einrichtungen zur Zuweisung eines Frequenzbands zu mindestens einem der Endgeräte, das abhängig vom ausgewählten Transportformat bemessen ist.

**12.** Computerprogrammprodukt, das von einem Kommunikationsnetzwerk heruntergeladen und/oder auf einem computerlesbaren Träger gespeichert und/oder von einem Prozessor ausgeführt werden kann, **dadurch gekennzeichnet, dass** es Programmcodeanweisungen zur Durchführung des Verwaltungsverfahrens nach einem der Ansprüche 1 bis 9 enthält.

Fig. 1

Fig. 2 (Art antérieur)

Fig. 3

Fig. 4

51 → S = { Ø }, j = 1

j = j+1

562

56

522

j = j+1

532

521

52

N

j == X ? Y

N

j == X ? Y ( ∃k ∈ L|Eff (k) > Eff (j) && n(k) ⩽ n(j) ) ? N j ∈ S

Y

531

53

561

55

54

Fig. 5

72

μP

71

73

M

Pg

Fig. 7

611 · 612 · 613 · 614 · 615

| 3 | 64QAM 1/2 | 5 | 75 | 12 |
|---|---|---|---|---|
| | | 4 | 60 | 11 |
| | | 3 | 45 | 10 |
| | | 2 | 30 | 9 |
| 2 | 16QAM 1/2 | 4 | 80 | 8 |
| | | 3 | 60 | 7 |
| | | 2 | 40 | 6 |
| | | 1 | 20 | 5 |
| 1 | QPSK 1/2 | 4 | 40 | 4 |
| | | 3 | 30 | 3 |
| | | 2 | 20 | 2 |
| | | 1 | 10 | 1 |

61

625

| 64QAM 1/2 | 5 | 75 | 12 |
|---|---|---|---|
| | 4 | 60 | 11 |
| | 3 | 45 | 10 |
| | 2 | 30 | 9 |
| 16QAM 1/2 | | | |
| | 1 | 20 | 5 |
| QPSK 1/2 | | | |
| | 1 | 10 | 1 |

62

Fig. 6

EP 2 090 131 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Part16: Air Interface For Fixed Broadband Wireless Access Systems. *IEEE Computer Society,* Octobre 2004
- Physical layer aspects for evolved Universal Terrestrial Radio Access (UTRA). *3GPP Technical Specification Group Radio Access Network (R7), 3GPP TR25814 v7.0.0,* Juin 2006
- System Analysis for UL SIMO SC-FDMA. *3GPP TSG-RAN WG1#45/R1-061525,* 08 Mai 2006
- **YOON et al.** Exploiting channel statistics to improve the average sum rate in OFDMA systems. *Vehicular Technology Conférence, printemps 2005, IEEE 61,* 30 Mai 2005, vol. 2, 1053-1057
- **STERNAD et al.** Channel estimation and prediction for adaptive OFDMA/TDMA uplinks, based on overlapping pilots. *Acoustics, Speech, and Signal Processing, 2005, Proceedings, IEEE International Conférence,* 18 Mars 2005, vol. 3, iii/861-iii/864
- Feasibility Study for Enhanced Uplink for UTRA FDD; (R6). *3GPP TR25896-600,* Mars 2004